Europäisches Patentamt

(19) European Patent Office

Office européen des brevets

(11) **EP 0 518 553 B1**

(12) **EUROPEAN PATENT SPECIFICATION**

(45) Date of publication and mention
of the grant of the patent:
**04.09.1996 Bulletin 1996/36**

(51) Int. Cl.$^6$: **C01B 7/04**

(21) Application number: **92305102.3**

(22) Date of filing: **03.06.1992**

(54) **Method and apparatus for industrially preparing chlorine**

Verfahren und Apparat zur industriellen Herstellung von Chlor

Méthode et appareil pour préparer industriellement du chlore

(84) Designated Contracting States:
**DE FR GB IT**

(30) Priority: **06.06.1991 JP 134781/91**
**06.06.1991 JP 134782/91**

(43) Date of publication of application:
**16.12.1992 Bulletin 1992/51**

(73) Proprietor: **MITSUI TOATSU CHEMICALS, Inc.**
**Chiyoda-Ku Tokyo 100 (JP)**

(72) Inventors:
 • **Itoh, Hiroyuki**
  **Ohmuta-shi, Fukuoka-ken (JP)**
 • **Kono, Yoshitsugu**
  **Ohmuta-shi, Fukuoka-ken (JP)**
 • **Tsuruda, Satoshi**
  **Ohmuta-shi, Fukuoka-ken (JP)**
 • **Takenaka, Shinji**
  **Ohmuta-shi, Fukuoka-ken (JP)**
 • **Hirayama, Teruo**
  **Ohmuta-shi, Fukuoka-ken (JP)**
 • **Kikuchi, Isao**
  **Ohmuta-shi, Fukuoka-ken (JP)**

(74) Representative: **Stuart, Ian Alexander et al**
 **MEWBURN ELLIS**
 **York House**
 **23 Kingsway**
 **London WC2B 6HP (GB)**

(56) References cited:
 **EP-A- 0 233 773**        **EP-A- 0 458 990**

Printed by Rank Xerox (UK) Business Services
2.13.4/3.4

## Description

The present invention relates to a method for preparing chlorine by oxidizing a gas containing hydrogen chloride with an oxygen-containing gas, and more specifically, it relates to an industrial chlorine preparation method which comprises oxidizing, with an oxygen-containing gas, hydrogen chloride gas in a waste gas which may have been produced in a reaction step involving various kinds of chlorine compounds. The resulting chlorine-containing gas is then concentrated/purifyied. It relates also to an apparatus for the practice of the chlorine preparation method.

Chlorine is manufactured on a large scale by the hydrolysis of sodium chloride, and the demand for chlorine increases year by year. However, the demand for caustic soda, which is simultaneously produced, is lower. Therefore, it is difficult to regulate this unbalance.

On the other hand, in a chlorination reaction or a phosgenation of an organic compound, a large amount of hydrogen chloride is formed as a by-product and this amount is much larger than the demand on the market. Thus, hydrogen chloride is disposed of in vain without being utilized, and in addition, a large treatment cost is required for the disposal.

A reaction for producing chlorine by oxidizing hydrogen chloride has long been known (the Deacon reaction). Copper catalysts which were invented by Deacon in 1868 have been heretofore considered to be catalysts showing the most excellent activity, and many so-called Deacon catalysts have been suggested which comprise copper chloride, potassium chloride and various kinds of compounds as the third components. However, these catalysts have a problem that when used, they require a high temperature of 400°C or more, and another problem that their life is short.

Besides these copper catalysts, it has been also suggested to use chromium oxide as a catalyst, but sufficient activity cannot be obtained. For example, U.S. Patent No. 676,667 discloses a method which comprises supporting $CrO_3$ on alumina, and then subjecting it to calcination or hydrogen reduction to form a trivalent chromia catalyst, but in this patent, only low conversions are mentioned. As in the above-mentioned U.S. patent, the chromium oxide catalyst obtained by converting hexavalent chromium into trivalent chromium has a high initial conversion, but the deterioration of the activity is remarkable. Accordingly, U.K. Patent No. 846,832 has suggested an improved method which comprises reacting a hydrogen chloride material with chromyl chloride which is continuously added, in order to obtain a catalyst capable of maintaining high conversion for a long period of time. However, even if chromium oxide is used by way of the catalyst as in such cases, a high reaction temperature is required and space velocity cannot be increased, so long as a novel reaction reagent is not added. Thus no catalysts which can withstand an industrial operation for mass production are disclosed therein.

The present inventors have already suggested industrial preparation methods in which a catalyst containing chromium oxide as the main component is used to obtain chlorine in a high yield (EP-A-0 233 773 and Japanese Patent Laid-open Nos. 275001/1987, 191403/1987, 270404/1987, 45102/1988, 11502/1988 and 107801/1988). These inventions have permitted the industrialization of the technique for manufacturing chlorine by oxidizing hydrogen chloride.

EP-A-0 233 773 concerns an apparatus and method for industrially preparing chlorine which comprises oxidizing hydrogen chloride in a starting material gas containing hydrogen chloride to obtain a product gas containing chlorine, and then concentrating/purifying chlorine in the product gas, the method comprising the following steps :

(a) a step of carrying out an oxidation reaction of hydrogen chloride in the presence of a chromium oxide catalyst at a reaction temperature of from 300 to 500°C by the use of 0.25 mol or more of oxygen per mol of hydrogen chloride contained in the starting material gas,

(b) a step of quenching the product gas mainly containing chlorine, water, unreacted hydrogen chloride, oxygen and volatilized/entrained chromium, and then washing it with water to recover chromium as an aqueous solution,

(c) a step of further washing the product gas with water for unreacted hydrogen chloride to be absorbed by water, thereby recovering unreacted hydrogen chloride as an aqueous hydrogen chloride solution,

(d) a step of further washing and dehydrating the product gas with sulfuric acid, and

(e) a step of separating chlorine from the product gas and then returning a part or all of the unadsorbed remaining gas to step (a) as a circulating gas.

Likewise in Japanese Patent Laid-open no. 275001/1987 mentioned above, chlorine in a produced gas is compressed, cooled and liquefied, and chlorine is then taken out in the state of liquid chlorine, and a part or all of the remaining gas is then returned to a reaction step as an oxygen source which is used in the reaction. In this reaction, an excess amount of oxygen is necessary, but unreacted oxygen is all contained in the remaining gas, and so it is important to return the remaining gas to the reaction step for the effective reutilization of oxygen.

However, this remaining gas usually contains 5 to 20% of chlorine, depending upon chlorine liquefying conditions. Therefore, when the remaining gas is returned to the reaction step, chlorine which does not take part in the reaction is mixed with the material gas at the inlet of a reactor. Since the reaction of oxidizing hydrogen chloride with oxygen is an equilibrium reaction, the conversion of hydrogen chloride in the oxidation reaction deteriorates, when chlorine is contained in the material. If chlorine is scarcely contained in the above-mentioned remaining gas, the conversion of chlorine can be improved as much as several percent, whereby economy will be remarkably improved.

Conventional techniques regarding the removal/recovery of chlorine from the gas usually comprise the absorption of chlorine in the gas by a halogenated hydrocarbon, mainly carbon tetrachloride and the separation of chlorine by vaporization. For example, these techniques are described in U.S. Patent No. 4,394,367, The Chem. Eng., 1963, CE, p 229) and Japanese Patent Laid-open No. 212202/1989. However, carbon tetrachloride is a harmful organic solvent, and its employment is unrecommendable from the viewpoint of environmental protection.

In the case that carbon tetrachloride still stays in the remaining gas after the absorption of chlorine, carbon tetrachloride is introduced into the reaction step and about 50% of the introduced carbon tetrachloride is then decomposed into chlorine and other components. However, a part of carbon tetrachloride flows from the reaction step to the subsequent step together with a reaction product gas, and finally discharged into a waste liquor or the like, which will cause environmental pollution. This is the reason why the employment of carbon tetrachloride is not preferable.

In the above-mentioned industrial preparation method suggested by the present inventors, chlorine is contained in a remaining gas from which liquefied chlorine has been separated, and when the remaining gas is returned to a reaction step, it cannot be avoided that the conversion of a hydrogen chloride material is lower as compared with a equilibrium conversion. In addition, a harmful solvent such as carbon tetrachloride is inevitably used for the recovery of chlorine.

The present inventors have previously suggested a process of separating chlorine from a gas containing chlorine and the concentrating it by a pressure swing adsorption process (Japanese Patent Application No. 75500/1990; EP-A-0,458,990 : published as WO 91/08824 on 27 June 1991). If operative conditions are suitably selected in this process, chlorine can be recovered from the gas containing chlorine and then concentrated, whereby the chlorine content in the remaining gas can be lowered to substantially zero. Moreover, a solvent such as carbon tetrachloride need not be used at all. If this invention is applied to the above-mentioned industrial preparation method of chlorine, the conversion of hydrogen chloride will be remarkably improved, and for the realization of this possibility, investigation has been made. As a result, it has been found that the conversion of hydrogen chloride in a specific method is several percent higher than in a conventional method, and the present invention has been completed on this knowledge. That is, the present invention intends to provide an industrial concentration/ purification method which comprises the steps of oxidizing hydrogen chloride in a starting material gas containing hydrogen chloride to obtain a product gas containing chlorine, and then concentrating/purifying the chlorine mainly by the use of a pressure swing adsorption process; and to provide an apparatus for practicing this method.

A preferred embodiment of the present invention may provide a high-yield and non-environmental pollution type high-purity chlorine preparation method and apparatus by which the produced gas containing chlorine can be obtained from the material gas containing hydrogen chloride with a high oxidizing reaction conversion, and a high-purity concentrated/purified chlorine gas and a treated waste gas scarcely containing the chlorine gas can be obtained from the produced gas containing impurities.

## BRIEF DESCRIPTION OF TEE DRAWINGS

Fig. 1 shows one example of a flow sheet which is suitable for the practice of a method of the present invention.

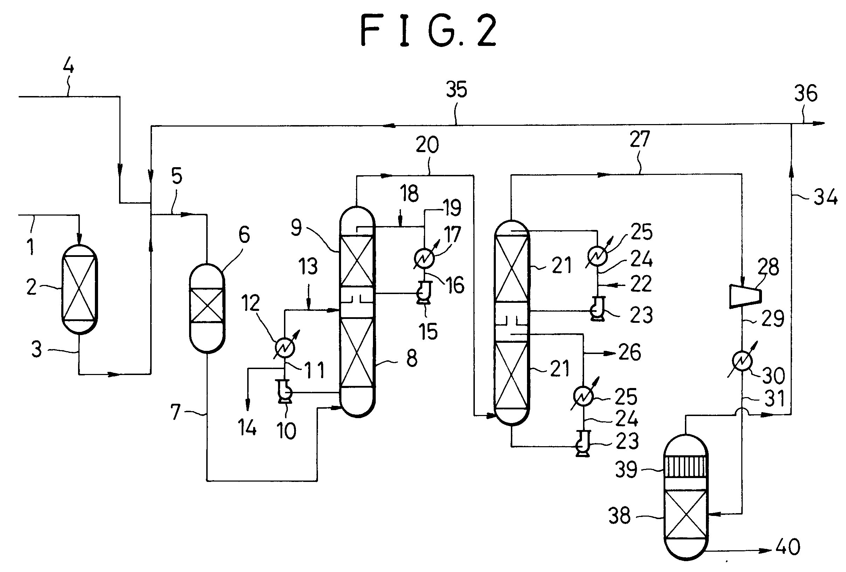

Fig. 2 is a view for the explanation of a comparative example.

Now, symbols which are used in this specification will be explained.

| | |
|---|---|
| 1: | Inlet passage of hydrogen chloride |
| 2: | Active carbon-packed tower |
| 3: | Hydrogen chloride flow path |
| 4: | Oxygen flow path |
| 5: | Mixed gas flow path |
| 6: | Reactor |
| 7: | Produced gas flow path |
| 8: | Chromium recovery tower |
| 9: | Hydrochloric acid gas absorbing tower |
| 10: | Pump |
| 11: | Aqueous chromium solution circulating system |
| 12: | Cooler |
| 13: | Water supply opening |
| 14: | Aqueous hydrochloric acid solution draw opening |
| 15: | Pump |
| 16: | Aqueous hydrochloric acid solution circulating system |
| 17: | Cooler |
| 18: | Water supply opening |
| 19: | Aqueous hydrochloric acid solution draw opening |
| 20: | Flow path for produced gas after water washing |
| 21: | Sulfuric acid washing tower |
| 22: | Sulfuric acid supply opening |
| 23: | Sulfuric acid pump |
| 24: | Sulfuric acid circulating system passage |
| 25: | Cooler |
| 26: | Dilute sulfuric acid draw opening |
| 27: | Dehydrated produced gas flow path |

28:   Compressor
29:   Compressed gas flow path
30:   Cooler
31:   Compressed cooled gas flow path
32a, 32b, 32c: Adsorbing tower
33:   Chlorine gas flow path
34:   Remaining gas flow path
35:   Circulating gas flow path
36:   Remaining gas flow path
37:   Vacuum pump
38:   Distillation column
39:   Condenser
40:   Liquefied chlorine flow path
41:   Uncondensed gas flow path

The present inventors have intensively researched in order to solve the above-mentioned problems, and as a result, they have completed the present invention. The respective aspects of the present invention are as follows.

The first aspect of the present invention is directed to a method for industrially preparing chlorine which comprises oxidizing hydrogen chloride in a starting material gas containing hydrogen chloride to obtain a produced gas containing chlorine, and then concentrating/purifying chlorine in the product gas, the method being characterized by comprising the following steps (a) to (f):

(a) a step of carrying out an oxidation reaction of hydrogen chloride in the presence of a chromium oxide catalyst at a reaction temperature of from 300 to 500°C by the use of 0.25 mol or more of oxygen per mol of hydrogen chloride contained in the starting material gas,
(b) a step of quenching the product gas mainly containing chlorine, water, unreacted hydrogen chloride, oxygen and volatilized/entrained chromium, and then washing it with water to recover chromium as an aqueous solution
(c) a step of further washing the product gas with water for unreacted hydrogen chloride to be absorbed by water, thereby recovering unreacted hydrogen chloride as an aqueous hydrogen chloride solution,
(d) a step of further washing and dehydrating the product gas with sulfuric acid,
(e) a step of adsorbing and recovering chlorine in the product gas by an adsorbent packing type pressure swing adsorption process, and then returning a part or all of the unadsorbed remaining gas to the previous oxidizing step (a) as a circulating gas, and
(f) a step of desorbing and recovering the chlorine gas adsorbed by the pressure swing adsorption process.

The second aspect of the present invention is directed to an apparatus for the practice of the first aspect of the present invention.

The third aspect of the present invention is directed to a method for industrially preparing chlorine according to the above-mentioned first aspect wherein the product gas which has undergone the dehydration step (d) is cooled and liquefied to separate a part of the chlorine contained in it as liquefied chlorine, and the uncondensed remaining gas is then returned to the step (e).

The fourth aspect of the present invention is directed to an apparatus for the practice of the third aspect of the present invention.

The fifth aspect of the present invention is directed to a method for industrially preparing chlorine according to the above-mentioned method wherein the produced gas which has undergone the dehydration step (d) and desorbed and recovered chlorine gas obtained in the recovery step (f) are cooled and liquefied to separate a part of chlorine contained therein as liquefied chlorine, and the uncondensed remaining gas is then returned to the step (e).

The sixth aspect of the present invention is directed to an apparatus for the practice of the fifth aspect of the present invention.

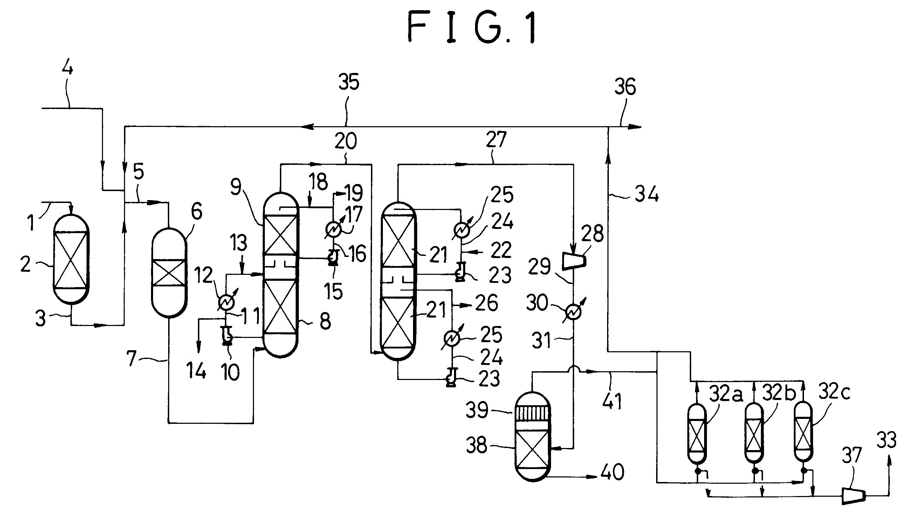

Next, one example of the industrial chlorine preparation method according to the present invention will be described in detail in reference to a flow scheme in Fig. 1.

It is preferable that organic compounds in a starting material gas fed through a hydrogen chloride inlet passage 1 are removed therefrom as much as possible. (However organic gases such as carbon dioxide gas which are commonly present do not cause any problems.) Therefore, the gas containing hydrogen chloride is introduced into an active carbon-packed tower 2, and in this tower 2, a small amount of the organic compounds are removed by active carbon adsorption and the thus treated hydrogen chloride is then led to the reactor 6.

A chromium oxide catalyst which is used in the present invention mainly comprises chromia ($Cr_2O_3$), and it can be formed by a precipitation method or an immersion method.

In the present invention, the pressure in the reactor 6 is in the range of from 1.1 to 6 kg/cm$^2$, preferably from 4 to 5 kg/cm$^2$. Furthermore, a reaction temperature is in the range of from 300 to 500°C, preferably 350 to 450°C. The higher the reaction temperature is, the higher the conversion velocity of hydrogen chloride is, but simultaneously, the amount of chromyl chloride which is volatilized in a vapor state from the catalyst increases.

The reaction of hydrogen chloride with oxygen proceeds in accordance with the following formula (1):

$$4HCl + O_2 \rightarrow 2Cl_2 + 2H_2O \qquad (1)$$

As shown by the reaction formula, 1 mol of oxygen to 4 mols of hydrogen chloride is a theoretical equivalent. The chromium oxide catalyst to be used is required to be always present under an oxidizing atmosphere during the reaction, and therefore the ratio of oxygen to hydrogen chloride in a mixed gas flow path 5 extending to the reactor 6 must be 0.25 mol or more, preferably 0.25 to 10 mols, more preferably 0.3 to 2 mols of oxygen per mol of hydrogen chloride. This ratio can be achieved by adjusting the flow rates of oxygen in an oxygen flow path 4 and the gas in a circulating gas flow path 35.

The produced gas coming from the reactor 6 is a high-temperature gas at about 300 to 500°C containing water, chlorine, unreacted hydrogen chloride, oxygen, and volatilized/entrained chromium and a trace amount of an inorganic gas derived from the catalyst components. This produced gas is next introduced into a chromium recovery tower 8, and then quenched and washed with water therein. In this chromium recovery tower 8, the volatilized/entrained chromium compounds are separated as a hydrochloric acid solution from the gas, and in this case, the separation operation is carried out at a temperature of from 90 to 130°C, when operation pressure is from about 4 to 5 kg/cm$^2$.

The gas from which the volatilized/entrained chromium has been removed is then introduced into a hydrochloric acid gas absorbing tower 9. In this absorbing tower 9, water having a temperature of from 20 to 100°C, suitably 60°C or less is circulated to quickly cool the produced gas with water, whereby most of water in the produced gas which has been formed in the reaction is condensed, and most of the hydrogen chloride gas in the produced gas is separated therefrom.

The gas containing chlorine, a trace amount of water, hydrogen chloride and other inorganic gas is led to a sulfuric acid washing tower 21 via a gas flow path 20 on the downstream side of the water washing step. In the sulfuric acid washing tower 21, sulfuric acid having a temperature of 20 to 80°C, preferably 60°C or less is circulated by a sulfuric acid pump 23, and the gas is brought into contact with sulfuric acid, so that the remaining water is completely absorbed by sulfuric acid. In order to properly maintain the concentration of sulfuric acid in a sulfuric acid circulating system passage 24, the flow rates of sulfuric acid in a sulfuric acid supply opening 22 and dilute sulfuric acid in a dilute sulfuric acid draw opening 26 are adjusted. Sulfuric acid is cooled to a predetermined temperature by a cooler 25.

The dried gas coming from the sulfuric acid washing tower 21 is forwarded to a compressor 28 through a dried gas flow path 27 and then compressed therein, and afterward it is led to a cooler 30 via a flow path 29 and then cooled thereby.

The compressed cooled gas in a flow path 31 is further cooled to liquefy and separate chlorine from the gaseous phase. The liquefaction of chlorine is carried out in specified conditions range of pressure and temperature. In this range, the lower the temperature is, the lower the compression pressure may be. When industrially liquefied, there are problems of some facilities and the like, and thus the compression pressure and the cooling temperature can be determined in view of optimum economical conditions in this range. In a usual operation, it is preferable that the compression pressure is in the range of from 11 to 26 kg/cm$^2$ and the temperature is in the range of from -15 to -30°C. If the production of high-purity chlorine is desired, a distillation column 38 can be disposed as shown in Fig. 1 so as to distill chlorine. That is, the produced gas is forwarded to the distillation column 38 through a flow path 31, and it is cooled and liquefied by a cooler 39 (cooled by a freezer) arranged in the upper portion of the distillation column 38 and then distilled. In the cooler 39, liquefied chlorine is separated from a gaseous phase containing an oxygen gas, an inorganic gas, a trace amount of a hydrogen chloride gas and uncondensed chlorine, and it is then taken out as liquefied chlorine through a flow path 40 at the bottom of the column 38. The distillation column need not have any particular structure. For example, a step column which can be used for a usual operation under pressure or under atmospheric pressure, or a packed column may be utilized. If high-purity liquid chlorine is not particularly necessary, the distillation column can be omitted, and the produced gas is cooled and liquefied by the cooler 39 to separate liquid chlorine from the gaseous phase.

The uncondensed gas is then introduced into any one of the adsorbing towers 32a, 32b, 32c of a pressure swing adsorption apparatus through a flow path 41. These adsorbing towers are packed with an optimum adsorbent (which will be described hereinafter) for separating chlorine from the other gases, and chlorine is adsorbed and separated from the uncondensed gas coming through the flow path 41 by this adsorbent to obtain, through a flow path 34, a gas from which chlorine has been removed so that it remains only at a negligible level. This remaining gas, since it has a high oxygen concentration, is mixed with a mixed gas of the starting material hydrogen chloride gas and oxygen via a circulating gas flow path 35 to be reused for the oxidation of the starting material hydrogen chloride. In this case, the proportion of other inorganic gas contained in the starting material hydrogen chloride and oxygen gases gradually increases during the continuous operation, and hence the inorganic gas is discharged as a waste gas from the system through a flow path 36 on occasion.

The pressure in the absorbing towers 32a, 32b, 32c during the adsorbing operation is in the range of from 4 to 16 kg/cm$^2$, preferably from 4 to 11 kg/cm$^2$. The operating temperature may be in the range of from 0 to 150°C, but in general, it is an ambient temperature, which is economical and has no particular problem.

As the adsorbent with which the absorbing towers 32a, 32b, 32c are packed, there can be used synthetic and natural zeolites, non-zeolite type porous acidic oxides, and carbonaceous adsorbents such as active carbons and molecular sieve carbon. Examples of the zeolites include A type, X type, Y type, L type, ZSM type and natural mordenite, but the preferable examples are X type, Y type, L type and ZSM type zeolites. Examples of the active carbons which can be used as the adsorbents include fruit shells system, wood system, coal system and petroleum system active carbons. Above all, molecular sieve carbon and coconut shell active carbon are preferable.

These adsorbents have a stronger affinity for chlorine than for oxygen, nitrogen, carbon dioxide, carbon monoxide and argon. Therefore, when the gas containing chlorine is introduced into the adsorbing tower packed with this kind of adsorbent, chlorine is adsorbed in preference to the other gases, and as a result, a gas having a low chlorine concentration can be obtained on the side of the gas outlet of the adsorbing tower. Thus, if optimum operation conditions are selected, chlorine is scarcely detected in the gas on the side of the gas outlet of the adsorbing tower.

If the adsorbing tower of reference numeral 32a is used, the introduction of the gas flow coming through the gas path 31 is switched from the adsorbing tower 32a to the adsorbing tower 32b, when the adsorption of chlorine in the adsorbing tower 32a has nearly reached a saturated state. The operation pressure in the adsorbing tower 32a is lowered to desorb the adsorbed chlorine and the other gases. At this time, the operation pressure is lower than the pressure at the time of the adsorption, and if necessary, the operation pressure may be decreased to a level lower than atmospheric pressure by a vacuum pump 37, which is effective in a certain case. The operation pressure during the desorption is preferably from 10 to 400 torr. The lower the desorption pressure is, the higher the purity of chlorine obtained through a flow path 33 by the desorption. However, in order to reduce the desorption pressure, the size of the vacuum pump 37 which is required is apt to excessively increase, and therefore the operation pressure can be determined on economic grounds. Furthermore, the operation temperature is optional, but basically it is economical that the operation temperature is the same as the temperature at the time of the adsorption.

This desorbing operation permits obtaining the gas having a higher chlorine concentration than the gas to be introduced, and the adsorbent can be regenerated by removing chlorine from the adsorbing tower 32a and then used again in the next adsorbing operation.

When the adsorbing tower of reference numeral 32b is under the adsorbing operation, the adsorbing tower 32a is under the desorbing operation, and the adsorbing tower 32c is in a waiting state after completion of desorption/recovery. When the adsorption of chlorine in the adsorbing tower 32b has nearly reached a saturated state, the gas introduction is switched from the adsorbing tower 32b to the adsorbing tower 32c. Such a successive switching operation permits always achieving the adsorption and desorption of chlorine as well as the regeneration of the adsorbent in the adsorbing towers 32a, 32b, 32c.

If the adsorbing tower is switched prior to the breakthrough of chlorine, the chlorine content in the remaining gas coming through a remaining gas flow path 34 can be reduced to substantially zero. Returning this gas to the reactor 6 through the flow path 35 can improve the conversion of hydrogen chloride as much as several percent, as described above.

The gas obtained by the desorption and taken out through a flow path 33 which is rich in chlorine has a chlorine purity of from 40 to 90 mol%, depending upon operative conditions. Therefore, the high-purity chlorine can be utilized as it is, if possible. However, in the case that purer chlorine is necessary, a usual liquefaction operation may be performed to purify chlorine. Alternatively, chlorine can be pressed by the compressor 28 and forwarded to the distillation column 38 through gas flow paths 29 and 31, and it is recovered as liquefied chlorine through a flow path 40. Since chlorine is concentrated by the pressure swing adsorption process, the chlorine gas coming through a flow path 33 contains nothing but impurities present in the compressed cooled gas coming through the flow path 31, and it does not interfere with the operation of the distillation column 38 at all. If the pressure swing adsorption process is replaced with a process in which absorption and distillation are carried out using an organic solvent such as carbon tetrachloride to recover chlorine, liquefied chlorine is apt to be contaminated with the solvent which is used for the absorption, and this contamination has a large influence on the quality of product chlorine.

Now, the present invention will be described in detail in reference to examples, but the scope of the present invention should not be limited to these examples.

Example 1

A hydrogen chloride gas having a pressure of 4 kg/cm$^2$ and a temperature of 25°C (containing 93.70% by weight of hydrogen chloride, 1.33% by weight of oxygen, 2.02% by weight of nitrogen, 2.88% by weight of carbon monoxide and 0.04% by weight of ortho-dichlorobenzene) was introduced into a tower 2 at a flow rate of 40.2 kg/hour (1.12 kg mol) via a flow path 1. The tower 2 was packed with active carbon (granules of 4 × 6 mm) obtained by the carbonization of coconut shells, and in this tower 2, organic compounds were removed from the hydrogen chloride gas. Next, an oxygen gas (containing 99.6% by weight of oxygen and 0.4% by weight of nitrogen) and an oxygen-containing circulating gas (containing a trace amount of hydrogen chloride, 59.8% by weight of oxygen, a trace amount of water, a trace amount of chlorine, 12.5% by weight of nitrogen, and 27.6% by weight of a carbon dioxide) were passed through a flow path 4 at flow rates of 10.6 kg/hour (0.33 kg mol) and 11.5 kg/hour (0.34 kg mol), respectively, and then added to the hydrogen chloride gas coming from the tower 2 through a flow path 3 (in a ratio of 0.54 mol of oxygen per mol of the hydrogen chloride material). The mixed gas was passed through a heater, in which the gas was heated to 200°C by heated steam.

Afterward, the gas was forwarded to a fluidized bed reactor 6.

A catalyst with which the reactor was packed was prepared as follows. That is, 6.0 kg of chromium nitrate nonahydrate were dissolved in 60 liters of deionized water, and 58 kg of 28% aqueous ammonia were then added dropwise thereto with sufficient stirring over 30 minutes. The resultant precipitated slurry was washed by decantation and then calcined, and colloidal silica was further added thereto in an amount of 10% based on the total weight. The mixed slurry was dried by a spray dryer to obtain a granular powder, and this powder was then calcined at 600°C for 3 hours in an air atmosphere, thereby obtaining a catalyst having an average particle diameter of from 50 to 60 μm. The above-mentioned operation was repeated to obtain 79 kg of the catalyst in all.

The fluidized bed reactor 6 was a cylindrical reactor lined with nickel and having a diameter of about 0.3 m and a height of about 3 m, and 40.2 kg of the above-mentioned catalyst were placed in this reactor.

The hydrogen chloride gas material, the oxygen gas and the oxygen-containing circulating gas were subjected to an oxidizing reaction at 410°C in the presence of the catalyst. A produced gas (containing 12.7% by weight of hydrogen chloride, 17.2% by weight of oxygen, 11.8% by weight of water, 46.5% by weight of chlorine, 3.7% by weight of nitrogen and 8.0% by weight of a carbon dioxide gas) which had been obtained by the oxidation was delivered to a chromium recovery tower 8 at a flow rate of 62.2 kg/hour (1.6 kg mol). The chromium recovery tower 8 had a hydrochloric acid gas absorbing tower 9 in its upper section and a filler therein, the diameter and the height of the tower being about 0.3 m and about 6 m, respectively. The lower chromium recovery tower was a tower for recovering chromium, and in this tower, water was sprayed from above and water was drawn from the bottom of the tower. In this case, water was always circulated, and the circulating water was adjusted to 50°C by a cooler.

Hydrogen chloride in the produced gas and volatilized/entrained chromium which was the main component of the catalyst were dissolved in water during the water washing, and the resultant aqueous solution having a certain concentration of chromium was taken out and circulated. In this case, in order to keep the circulation of water, a predetermined amount of water was always replenished and the about 0.15% by weight aqueous chromium solution was continuously taken out. The aqueous hydrochloric acid solution in which chromium was dissolved was afterward neutralized with an alkali and then recovered.

The produced gas coming through a mist separator disposed on the filler in the chromium recovery tower was introduced into the hydrochloric acid gas absorbing tower 9 on the tower 8. This absorbing tower 9 was packed with Raschig rings having a diameter of 1 inch, and in this tower 9, water at 25°C was allowed to fall from above at a flow rate of 40.0 kg/hour to wash the produced gas in a counter current washing manner. After the washing, water at 33°C was cooled to 15°C by a cooler and then circulated. During the circulation and washing, the washing water (the aqueous hydrochloric acid solution) (containing 30.2% by weight of hydrochloric acid, 69.4% by weight of water and 0.4% by weight of chlorine) was drawn through the outlet of a circulating pump at a flow rate of about 26 kg/hour. Water was added to the hydrochloric acid gas absorbing tower 9 as much as the amount of the removed washing water.

The produced gas containing a less amount of the hydrogen chloride gas which had been washed with water in the hydrochloric acid gas absorbing tower 9 was then forwarded to a sulfuric acid washing tower 21. This sulfuric acid washing tower 21 was packed with a filler and separated into an upper section lined with PVC and a lower section, the diameter and the height of the tower 21 being about 0.3 m and about 7 m, respectively. 90 to 95% sulfuric acid at 15°C was fed to the top of the washing tower in the upper section to wash the produced gas in a counter current manner, thereby dehydrating the gas. After the washing of the gas, sulfuric acid at the bottom of the tower was partially drawn out, cooled to 15°C by a cooler, and then circulated for washing in the sulfuric acid washing tower by means of a circulating pump. For the purpose of maintaining the sulfuric acid concentration at 90 to 95%, 98% sulfuric acid was always added to this circulating system at a flow rate of about 2.0 kg/hour. The remaining sulfuric acid on the bottom of the sulfuric acid washing tower in the upper section was allowed to fall to the top of the sulfuric acid washing tower in the lower section to further wash and dehydrate the produced gas in the counter current manner.

Sulfuric acid which fell to the bottom of the sulfuric acid washing tower in the lower section was drawn and then cooled to 15°C by a cooler to become 70% sulfuric acid, and it was returned to the top of the sulfuric acid washing tower in the lower section by means of the circulating pump and then circulated to wash and dehydrate the produced gas. About 70 to 90% sulfuric acid was drawn through the outlet of the circulating pump in this circulating system so as to constantly keep the surface of the solution on the bottom of the sulfuric acid washing tower.

The produced gas (containing a trace amount of hydrogen chloride, 22.9% by weight of oxygen, a trace amount of water, 61.5% by weight of chlorine, 4.9% by weight of nitrogen and 10.6% by weight of a carbon dioxide gas) at about 20°C coming from the sulfuric acid washing tower was introduced into a compressor 28 at a flow rate of 46.8 kg/hour (0.9 kg mol) and then compressed therein to increase gas pressure from 4 kg/cm$^2$ to 8 kg/cm$^2$, and the gas was then cooled to 25°C.

This compressed produced gas was forwarded to a distillation column 38. This distillation column had an inner diameter of about 0.15 m and a height of about 6 m, and it had a filler therein and was provided on its upper portion with a cooler 39 which could be cooled by a freezer. The compressed produced gas introduced into the middle portion of the distillation column 38 was cooled by the upper cooler, so that chlorine in the produced gas was liquefied and compressed at about -25°C and flowed down to the bottom through the filler in the tower. During this flowing down, liquefied chlorine was purified and impurities in liquefied chlorine were delivered to the top of the tower together with the remaining gas such as oxygen, and liquefied chlorine on the bottom of the tower was then separated as liquid chlorine through a flow path 40. In this case, liquid chlorine having a purity of 99.0% by weight could be obtained at a flow rate of 20.7 kg/hour (0.3 kg mol). Furthemore, an uncondensed gas (containing 41.0% by weight of oxygen, 31.2% by weight of chlorine, 8.8% by weight of nitrogen and 10.6% by weight of a carbon dioxide gas) was obtained from the gas outlet of the cooler 39 through a flow path 41 at a flow rate of 26.1 kg/hour.

Three adsorbing towers 32a, 32b, 32c having a diameter of about 0.3 m and a height of about 2 m were each packed with 90 kg of a synthetic Y type zeolite (made by Zeochem Co., Ltd.), and they were then dried by passing nitrogen through these adsorbing towers under vacuum prior to use. The above-mentioned uncondensed gas was fed to the tower 32a of these adsorbing towers via the flow path 41 for 10 minutes. In the gas obtained from the top of the adsorbing tower 32a through a flow path 34 during this feed, chlorine was scarcely detected. After the feed for 10 minutes, the gas feed was switched to the next adsorbing tower 32b, and the pressure in the adsorbing tower 32b was reduced to 20 torr by means of a vacuum pump 37 and this tower was then evacuated for 10 minutes. In the gas obtained through a flow path 33, a chlorine concentration was 90.0% by weight. After the evacuation for 10 minutes, the adsorbing tower 32a became a waiting state for the adsorption of the compressed gas again. This adsorbing operation was successively carried out in the order of 32a, 32b and 32c to continuously treat the compressed gas, thereby obtaining a chlorine gas through the flow path 33 and the remaining gas through the flow path 34. In this case, the flow rate of the chlorine gas was 9.1 kg/hour, and that of the remaining gas was 17.1 kg/hour.

In the remaining gas coming through the flow path 34, oxygen was contained as the main component and an inorganic gas was further contained as the other component. A part of the remaining gas was passed through a circulating gas flow path 35 at 11.5 kg/hour, and then mixed with a reactor inlet gas to reutilize it for the oxidation of hydrogen chloride. Moreover, the other part of the remaining gas was washed with water in a scrubbing tower and then discharged into the atmosphere at a flow rate of about 6 kg/hour through a flow path 36.

A yield of total chlorine made up of the liquid chlorine coming through the flow path 40, the chlorine gas coming through the flow path 33 and the remaining gas coming through the flow path 36 to the hydrochloric acid material gas coming through the flow path 1 was 79%.

Example 2

A hydrogen chloride gas having a pressure of 4 kg/cm$^2$ and a temperature of 25°C (containing 93.70% by weight of hydrogen chloride, 1.33% by weight of oxygen, 2.02% by weight of nitrogen, 2.88% by weight of carbon monoxide and 0.04% by weight of ortho-dichlorobenzene) was introduced into a tower 2 at a flow rate of 39.4 kg/hour (1.10 kg mol) via a flow path 1. The tower 2 was packed with active carbon (granules of 4 × 6 mm) obtained by the carbonization of coconut shells, and in this tower 2, organic compounds were removed from the hydrogen chloride gas. Next, an oxygen gas (containing 99.6% by weight of oxygen and 0.4% by weight of nitrogen) and an oxygen-containing circulating gas (containing a trace amount of hydrogen chloride, 59.2% by weight of oxygen, a trace amount of water, a trace amount of chlorine, 13.2% by weight of nitrogen, and 27.6% by weight of a carbon dioxide gas) were passed through a flow path 4 at flow rates of 10.4 kg/hour (0.32 kg mol) and 11.4 kg/hour (0.34 kg mol), respectively, and then added to the hydrogen chloride gas coming from the tower 2 through a flow path 3 (in a ratio of 0.54 mol of oxygen per mol of the hydrogen chloride material). The mixed gas was passed through a heater, in which the gas was heated to 200°C by heated steam. Afterward, the gas was forwarded to a fluidized bed reactor 6.

A catalyst with which the reactor was packed was prepared by the same procedure as in Example 1. The fluidized bed reactor 6 was the same as in Example 1, and 39.4 kg of the above-mentioned catalyst were placed in this reactor.

The hydrogen chloride gas material, the oxygen gas and the oxygen-containing circulating gas were subjected to an oxidizing reaction at 410°C in the presence of the catalyst. A produced gas (containing 12.7% by weight of hydrogen chloride, 17.2% by weight of oxygen, 11.8% by weight of water, 46.4% by weight of chlorine, 3.8% by weight of nitrogen and 8.1% by weight of a carbon dioxide gas) which had been obtained by the oxidation was delivered to a chromium recovery tower 8 at a flow rate of 61.1 kg/hour (1.5 kg mol). The chromium recovery tower 8 was the same as in Example 1 and was used to carry out the same operation as in Example 1.

The produced gas coming through a mist separator disposed on the filler in the chromium recovery tower was introduced into the same hydrochloric acid gas absorbing tower 9 as in Example 1, and this absorbing tower 9 was used to carry out the same operation as in Example 1. That is, water at 25°C was fed thereto at a flow rate of 40.0 kg/hour to wash the produced gas in a counter current washing manner. After the washing, water was cooled to 15°C by a cooler and then circulated. During the circulation and washing, the washing water (the aqueous hydrochloric acid solution) (containing 29.3% by weight of hydrochloric acid, 70.3% by weight of water and 0.4% by weight of chlorine) was drawn through the outlet of a circulating pump at a flow rate of about 26 kg/hour. Water was added to the hydrochloric acid gas absorbing tower 9 as much as the amount of the removed washing water.

The produced gas containing a less amount of the hydrogen chloride gas which had been washed with water in the hydrochloric acid gas absorbing tower 9 was then forwarded to a sulfuric acid washing tower 21. This sulfuric acid washing tower 21 was used to carry out the same procedure as in Example 1. That is, 90 to 95% sulfuric acid at 15°C was fed to the top of the upper section of the washing tower to wash the produced gas in a counter current manner, thereby dehydrating the gas. After the washing of the gas, sulfuric acid on the bottom of the tower was partially drawn off, cooled to 15°C by a cooler, and then circulated for washing in the sulfuric acid washing tower by means of a circulating pump. For the purpose of maintaining the sulfuric acid concentration at 90 to 95%, 98% sulfuric acid was always added to this circulating system at a flow rate of about 2.0 kg/hour. The remaining sulfuric acid on the bottom of the sulfuric acid washing tower in the upper section was allowed to fall to the top of the sulfuric acid washing tower in the lower section to further wash and dehydrate the produced gas in the counter current manner.

Sulfuric acid which fell to the bottom of the sulfuric acid washing tower in the lower section was drawn and then cooled to 15°C by a cooler to become 70% sulfuric acid, and it was returned to the top of the sulfuric acid washing tower in the lower section by means of the circulating pump and then circulated to wash and dehydrate the produced gas. About 70 to 90% sulfuric acid was drawn through the outlet of the circulating pump in this circulating system so as to constantly keep the liquid level of the solution on the bottom of the sulfuric acid washing tower.

The produced gas (containing a trace amount of hydrogen chloride, 22.9% by weight of oxygen, a trace amount of water, 61.4% by weight of chlorine, 5.1% by weight of nitrogen and 10.7% by weight of a carbon dioxide gas) at about 20°C coming from the sulfuric acid washing tower was mixed with the undermentioned gas coming through a flow path 33, introduced into a compressor 28 at a flow rate of 46.0 kg/hour (0.9 kg mol), and then compressed therein to increase gas pressure from 4 kg/cm$^2$ to 8 kg/cm$^2$, and the gas was then cooled to 25°C.

This compressed produced gas which had been cooled to 25°C was forwarded to the same distillation column 38 as in Example 1 and a subsequent cooler 39. The compressed produced gas introduced into the middle stage of the distillation column was cooled by the upper cooler, so that chlorine in the produced gas was liquefied and compressed at about -25°C and flowed down to the bottom through the filler in the tower. During this flowing down, liquefied chlorine was purified and impurities in liquefied chlorine were delivered to the top of the tower together with the remaining gas such as oxygen, and liquefied chlorine on the bottom of the tower was then separated as liquid chlorine through a flow path 40. In this case, liquid chlorine having a purity of 99.0% by weight could be obtained at a flow rate of 28.3 kg/hour (0.4 kg mol). Furthermore, an uncondensed gas (containing 40.6% by weight of oxygen, 31.1% by weight of chlorine, 9.3% by weight of nitrogen and 19.0% by weight of a carbon dioxide gas) was obtained from the gas outlet of the cooler 39 through a flow path 41 at a flow rate of 27.2 kg/hour.

The same three adsorbing towers 32a, 32b, 32c as in Example 1 were each packed with a synthetic Y type zeolite in the same manner as in Example 1, and they were then dried by passing nitrogen through these adsorbing towers under vacuum prior to use. The above-mentioned uncondensed gas was fed to the tower 32a of these adsorbing towers via the flow path 41 for 10 minutes. In the gas obtained from the top of the adsorbing tower 32a through a flow path 34 during this feed, chlorine was scarcely detected. After the feed for 10 minutes, the gas feed was switched to the next adsorbing tower 32b, and the pressure in the adsorbing tower 32b was reduced to 20 torr by means of a vacuum pump 37 and this tower was then evacuated for 10 minutes. In the gas obtained through a flow path 33, a chlorine concentration was 88.7% by weight. After the evacuation for 10 minutes, the adsorbing tower 32a became a waiting state for the adsorption of the compressed gas again. This adsorbing operation was successively carried out in the order of 32a, 32b and 32c to continuously treat the compressed gas, thereby obtaining a chlorine gas through the flow path 33 and the remaining gas through the flow path 34. In this case, the flow rate of the chlorine gas was 9.4 kg/hour, and that of the remaining gas was 17.8 kg/hour. This chlorine gas coming through the flow path 33 was mixed with the dehydrated produced gas coming from a flow path 27, and the mixed gas was fed to a compressor 28, in which compression, liquefaction and distillation were carried out again.

In the remaining gas coming through the flow path 34, oxygen was contained as the main component and an inorganic gas was further contained as the other component. A part of the remaining gas was passed through a circulating gas flow path 35 at 11.4 kg/hour, and then mixed with a reactor inlet gas to reutilize it for the oxidation of hydrogen chloride. Moreover, the other part of the remaining gas was washed with water in a scrubbing tower and then discharged into the atmosphere at a flow rate of about 6 kg/hour through a flow path 36.

A yield of total chlorine contained in liquid chlorine coming through the flow path 40 and the remaining gas coming through the flow path 36 to the hydrochloric acid material gas coming through the flow path 1 was 79%.

Example 3

A hydrogen chloride gas having a pressure of 4 kg/cm$^2$ and a temperature of 25°C (containing 93.70% by weight of hydrogen chloride, 1.33% by weight of oxygen, 2.02% by weight of nitrogen, 2.88% by weight of carbon monoxide and 0.04% by weight of ortho-dichlorobenzene) was introduced into a tower 2 at a flow rate of 39.4 kg/hour (1.10 kg mol) via a flow path 1. The tower 2 was packed with active carbon (granules of 4 × 6 mm) obtained by the carbonization of coconut shells, and in this tower 2, organic compounds were removed from the hydrogen chloride gas. Next, an oxygen gas (containing 99.6% by weight of oxygen and 0.4% by weight of nitrogen) and an oxygen-containing circulating gas (containing a trace amount of hydrogen chloride, 63.1% by weight of oxygen, a trace amount of water, a trace amount of chlorine, 9.0% by weight of nitrogen, and 27.9% by weight of a carbon dioxide) were passed through a flow path 4 at flow rates of 10.4 kg/hour (0.33 kg mol) and 10.7 kg/hour (0.31 kg mol), respectively, and then added to the hydrogen chloride gas coming from the tower 2 through a flow path 3 (in a ratio of 0.54 mol of oxygen per mol of the hydrogen chloride material). The mixed gas was passed through a heater, in which the gas was heated to 200°C by heated steam. Afterward, the gas was forwarded to a fluidized bed reactor 6.

A catalyst with which the reactor was packed was prepared as follows. That is, 3.0 kg of chromium nitrate nonahydrate were dissolved in 30 liters of deionized water, and 29 kg of 28% aqueous ammonia were then added dropwise thereto with sufficient stirring over 30 minutes. The resultant precipitated slurry was washed by decantation and then calcined, and colloidal silica was further added thereto in an amount of 10% based on the total weight. The mixed slurry was dried by a spray dryer to obtain a granular powder, and this powder was then calcined at 600°C for 3 hours in an air atmosphere, thereby obtaining a catalyst having an average particle diameter of from 50 to 60 μm. The above-mentioned operation was repeated to obtain 39.5 kg of the catalyst in all.

The fluidized bed reactor 6 was a cylindrical reactor lined with nickel and having a diameter of about 0.3 m and a height of about 3 m, and 39.5 kg of the above-mentioned catalyst were placed in this reactor.

The hydrogen chloride gas material, the oxygen gas and the oxygen-containing circulating gas were subjected to an oxidizing reaction at 410°C in the presence of the catalyst. A produced gas (containing 12.7% by weight of hydrogen chloride, 17.3% by weight of oxygen, 11.8% by weight of water, 47.3% by weight of chlorine, 3.0% by weight of nitrogen and 7.8% by weight of a carbon dioxide gas) which had been obtained by the oxidation was delivered to a chromium recovery tower 8 at a flow rate of 60.4 kg/hour (1.5 kg mol). The chromium recovery tower had a hydrochloric acid gas absorbing tower 9 in its upper section and a filler therein, the diameter and the height of the tower being about 0.3 m and about 6 m, respectively. The lower chromium recovery tower was a tower for recovering chromium, and in this tower, water was sprayed from above and water was drawn from the bottom of the tower. In this case, water was always circulated, and the circulating water was adjusted to 50°C by a cooler.

Hydrogen chloride in the produced gas and volatilized/entrained chromium which was the main component of the catalyst were dissolved in water during the water washing, and the resultant aqueous solution having a certain concentration of chromium was taken out and circulated. In this case, in order to keep the circulation of water, a predetermined amount of water was always replenished and the about 0.15% by weight aqueous chromium solution was continuously taken out. The aqueous hydrochloric acid solution in which chromium was dissolved was afterward neutralized with an alkali and then recovered.

The produced gas coming through a mist separator disposed on the filler in the chromium recovery tower was introduced into the hydrochloric acid gas absorbing tower 9 on the tower 8. This absorbing tower 9 was packed with Raschig rings having a diameter of 1 inch, and in this tower 9, water at 25°C was allowed to fall from above at a flow rate of 40.0 kg/hour to wash the produced gas in a counter current washing manner. After the washing, water at 33°C was cooled to 15°C by a cooler and then circulated. During the circulation and washing, the washing water (the aqueous hydrochloric acid solution) (containing 30.2% by weight of hydrochloric acid, 69.4% by weight of water and 0.4% by weight of chlorine) was drawn through the outlet of a circulating pump at a flow rate of about 10 kg/hour. Water was added to the hydrochloric acid gas absorbing tower 9 as much as the amount of the removed washing water.

The produced gas containing a less amount of the hydrogen chloride gas which had been washed with water in the hydrochloric acid gas absorbing tower was then forwarded to a sulfuric acid washing tower 21. This sulfuric acid washing tower was packed with a filler and separated into an upper section lined with PVC and a lower section, the diameter and the height of the tower 21 being about 0.3 m and about 7 m, respectively. 90 to 95% sulfuric acid at 15°C was fed to the top of the washing tower in the upper section to wash the produced gas in a counter current manner, thereby dehydrating the gas. After the washing of the gas had been over, sulfuric acid on the bottom of the tower was partially drawn, cooled to 15°C by a cooler, and then circulated for the sake of the washing in the sulfuric acid washing tower by means of a circulating pump. For the purpose of maintaining the sulfuric acid concentration at 90 to 95%, 98% sulfuric acid was always added to this circulating system at a flow rate of about 2.0 kg/hour. The remaining sulfuric acid on the bottom of the sulfuric acid washing tower in the upper section was allowed to fall to the top of the sulfuric acid washing tower in the lower section to further wash and dehydrate the produced gas in the counter current manner.

Sulfuric acid which fell to the bottom of the sulfuric acid washing tower in the lower section was drawn and then cooled to 15°C by a cooler to become 70% sulfuric acid, and it was returned to the top of the sulfuric acid washing tower in the lower section by means of the circulating pump and then circulated to wash and dehydrate the produced gas. About 70 to 90 sulfuric acid was drawn through the outlet of the circulating pump in this circulating system so as to constantly keep the surface of the solution on the bottom of the sulfuric acid washing tower.

The produced gas (containing a trace amount of hydrogen chloride, 22.9% by weight of oxygen, a trace amount of water, 62.6% by weight of chlorine, 3.9% by weight of nitrogen and 10.4% by weight of a carbon dioxide gas) at about 20°C coming from the sulfuric acid washing tower was introduced into a compressor 28 at a flow rate of 45.7 kg/hour (0.9 kg mol) and then compressed therein to increase gas pressure from 4 kg/cm$^2$ to 8 kg/cm$^2$, and the gas was then cooled to 25°C.

Three adsorbing towers 32a, 32b, 32c having a diameter of about 0.3 m and a height of about 2 m were each packed with 90 kg of a synthetic Y type zeolite (made by Zeochem Co., Ltd.), and they were then dried by passing nitrogen through these adsorbing towers under vacuum prior to use. The above-mentioned uncondensed gas was fed to the tower 32a of these adsorbing towers for 10 minutes. In the gas obtained from the top of the adsorbing tower 32a through a flow path 34 during this feed, chlorine was scarcely detected. After 10 minutes, the gas feed was switched to the next adsorbing tower 32b, and the pressure in the adsorbing tower 32b was reduced to 20 torr by means of a vacuum pump 37 and this tower was then evacuated for 10 minutes. In the chlorine gas obtained through a flow path 33, a chlorine concentration was 90.1% by weight. After evacuation for 10 minutes, the adsorbing tower 32a was in a waiting state for the adsorption of the compressed gas again. This adsorbing operation was successively carried out in the order of 32a, 32b and 32c to continuously treat the compressed gas, thereby obtaining a chlorine gas through the flow path 33 and the remaining gas through the flow path 34. In this case, the flow rate of the chlorine gas was 31.7 kg/hour, and that of the remaining gas was 13.9 kg/hour.

In this remaining gas, oxygen was contained as the main component and an inorganic gas was further contained as the other component. A part of the remaining gas was passed through a circulating gas flow path 35 at 10.7 kg/hour, and then mixed with a reactor inlet gas to reutilize it for the oxidation of hydrogen chloride. Moreover, the other part of the remaining gas was washed with water in a scrubbing tower and then discharged into the atmosphere at a flow rate of about 4 kg/hour through a flow path 36.

A yield of chlorine contained in the chlorine gas coming through the flow path 33 to the hydrochloric acid material gas coming through the flow path 1 was 79%.

Comparative Example 1

A hydrogen chloride gas having a pressure of 4 kg/cm$^2$ and a temperature of 25°C (containing 93.70% by weight of hydrogen chloride, 1.33% by weight of oxygen, 2.02% by weight of nitrogen, 2.88% by weight of carbon monoxide and 0.04% by weight of ortho-dichlorobenzene) was introduced into a tower 2 at a flow rate of 42.6 kg/hour (1.19 kg mol) via a flow path 1. The tower 2 was packed with active carbon (granules of 4 × 6 mm) obtained by the carbonization of coconut shells, and in this tower 2, organic compounds were removed from the hydrogen chloride gas. Next, an oxygen gas (containing 99.6% by weight of oxygen and 0.4% by weight of nitrogen) and an oxygen-containing circulating gas (containing a trace amount of hydrogen chloride, 46.0% by weight of oxygen, a trace amount of water, 32% by weight of chlorine, 8.7% by weight of nitrogen, and 13.3% by weight of a carbon dioxide gas) were passed through a flow path 4 at flow rates of 11.2 kg/hour (0.35 kg mol) and 15.8 kg/hour (0.39 kg mol), respectively, and then added to the hydrogen chloride gas coming from the tower 2 through a flow path 3 (in a ratio of 0.54 mol of oxygen per mol of the hydrogen chloride material). The mixed gas was passed through a heater, in which the gas was heated to 200°C by heat vapor. Afterward, the gas was forwarded to a fluidized bed reactor 6.

A catalyst with which the reactor was packed was prepared by the same procedure as in Example 1. The fluidized bed reactor 6 was the same as in Example 1, and 42.7 kg of the above-mentioned catalyst were placed in this reactor.

The hydrogen chloride gas material, the oxygen gas and the oxygen-containing circulating gas were subjected to an oxidizing reaction at 410°C in the presence of the catalyst. A produced gas (containing 13.6% by weight of hydrogen chloride, 16.6% by weight of oxygen, 10.7% by weight of water, 49.9% by weight of chlorine, 3.3% by weight of nitrogen and 5.7% by weight of a carbon dioxide gas) which had been obtained by the oxidation was delivered to a chromium recovery tower 8 at a flow rate of 69.6 kg/hour (1.7 kg mol). The chromium recovery tower was the same as in Example 1 and was used to carry out the same operation as in Example 1.

The produced gas coming through a mist separator disposed on the filler in the chromium recovery tower was introduced into the same hydrochloric acid gas absorbing tower 9 as in Example 1, and this absorbing tower 9 was used to carry out the same operation as in Example 1. That is, water at 25°C was fed thereto at a flow rate of 40.0 kg/hour to wash the produced gas in a counter current washing manner. After the washing, water was cooled to 15°C by a cooler and then circulated. During the circulation and washing, the washing water (the aqueous hydrochloric acid solution) (containing 29.3% by weight of hydrochloric acid, 70.3% by weight of water and 0.4% by weight of chlorine) was drawn through the outlet of a circulating pump at a flow rate of about 10 kg/hour. Water was added to the hydrochloric acid gas absorbing tower 9 as much as the amount of the removed washing water.

The produced gas containing a less amount of the hydrogen chloride gas which had been washed with water in the hydrochloric acid gas absorbing tower was then forwarded to the same sulfuric acid washing tower 21 as in Example 1. This sulfuric acid washing tower 21 was used to carry out the same procedure as in Example 1. That is, 90 to 95% sulfuric acid at 15°C was fed to the top of the upper section of the washing tower to wash the produced gas in a counter current manner, thereby dehydrating the gas. After the washing of the gas had been over, sulfuric acid on the bottom of the tower was partially drawn, cooled to 15°C by a cooler, and then circulated for the sake of the washing in the sulfuric acid washing tower by means of a circulating pump. For the purpose of maintaining the sulfuric acid concentration at 90 to 95%, 98% sulfuric acid was always added to this circulating system at a flow rate of about 2.0 kg/hour. The remaining sulfuric acid on the bottom of the sulfuric acid washing tower in the upper section was allowed to fall to the top of the sulfuric acid washing tower in the lower section to further wash and dehydrate the produced gas in the counter current manner.

Sulfuric acid which fell to the bottom of the sulfuric acid washing tower in the lower section was drawn and then cooled to 15°C by a cooler to become 70% sulfuric acid, and it was returned to the top of the sulfuric acid washing tower in the lower section by means of the circulating pump and then circulated to wash and dehydrate the produced gas. About 70% sulfuric acid was drawn through the outlet of the circulating pump in this circulating system at a flow rate of about 2 kg/hour so as to constantly keep the surface of the solution on the bottom of the sulfuric acid washing tower.

The produced gas (containing a trace amount of hydrogen chloride, 22.0% by weight of oxygen, a trace amount of water, 67.0% by weight of chlorine, 4.3% by weight of nitrogen and 7.6% by weight of a carbon dioxide gas) at about 20°C coming from the sulfuric acid washing tower was introduced into a compressor 28 at a flow rate of 52.8 kg/hour (1.0 kg mol), and then compressed therein to increase gas pressure from 4 kg/cm$^2$ to 8 kg/cm$^2$, and the gas was then cooled to 25°C.

The compressed produced gas which had been cooled to 25°C was forwarded to a distillation column 38. This distillation column had an inner diameter of about 0.15 m and a height of about 6 m, and it had a filler therein and was provided on its upper portion with a cooler 39 which could be cooled by a freezer. The compressed produced gas introduced into the middle portion of the distillation column was cooled by the upper cooler, so that chlorine in the produced gas was liquefied and compressed at about -25°C and flowed down to the bottom through the filler in the tower. During this flowing down, liquefied chlorine was purified and impurities in liquefied chlorine were delivered to the top of the tower together with the remaining gas such as oxygen, and liquefied chlorine on the bottom of the tower was then separated as liquid chlorine through a flow path 40. In this case, liquid chlorine having a purity of 99.0% by weight could be obtained at a flow rate of 26.7 kg/hour (0.4 kg mol).

In the remaining gas coming through the flow path 34, oxygen was contained as the main component and an inorganic gas was further contained as the other component. A part of the remaining gas was passed through a circulating gas flow path 35 at 15.8 kg/hour, and then mixed with a reactor inlet gas to reutilize it for the oxidation of hydrogen chloride. Moreover, the other part of the remaining gas was washed with water in a scrubbing tower and then discharged into the atmosphere at a flow rate of about 9 kg/hour through a flow path 36.

A yield of chlorine contained in the produced gas coming through the flow path 34 and liquid chlorine coming through the flow path 40 to the hydrochloric acid material gas coming through the flow path 1 was 76%.

The reaction and operative conditions until the dehydration of the produced gas in Comparative Example 1 were the same as in Examples 1 and 2, but the yield of chlorine in Comparative Example 1 was about 3% lower than in Examples 1 and 2.

In the present invention in which a hydrogen chloride-containing gas is oxidized to prepare chlorine, a pressure swing adsorption process is used, and the chlorine content in a circulating gas is reduced to substantially zero, whereby the equivalent conversion of the oxidation reaction can be increased and the yield of chlorine can be also improved. In consequence, it is fair to say that the present invention is an industrially very important chlorine preparation method and apparatus.

**Claims**

1. A method for industrially preparing chlorine which comprises oxidizing hydrogen chloride in a starting material gas containing hydrogen chloride to obtain a product gas containing chlorine, and then concentrating/purifying chlorine in the product gas, the method comprising the following steps:

(a) a step of carrying out an oxidation reaction of hydrogen chloride in the presence of a chromium oxide catalyst at a reaction temperature of from 300 to 500°C by the use of 0.25 mol or more of oxygen per mol of hydrogen chloride contained in the starting material gas,
(b) a step of quenching the product gas mainly containing chlorine, water, unreacted hydrogen chloride, oxygen and volatilized/entrained chromium, and then washing it with water to recover chromium as an aqueous solution,

(c) a step of further washing the product gas with water for unreacted hydrogen chloride to be absorbed by water, thereby recovering unreacted hydrogen chloride as an aqueous hydrogen chloride solution,

(d) a step of further washing and dehydrating the product gas with sulfuric acid,

(e) a step of separating chlorine from the product gas and then returning a part or all of the unadsorbed remaining gas to the previous oxidizing step (a) as a circulating gas; characterised in that step (e) employs an adsorbent packing type pressure swing adsorption process, followed by:

(f) a step of desorbing and recovering the chlorine gas adsorbed by the pressure swing adsorption process.

2. The method for industrially preparing chlorine according to Claim 1 wherein the product gas which has undergone the dehydration step (d) is cooled and liquefied to separate a part of the chlorine contained in the product gas as liquefied chlorine, and the uncondensed remaining gas is then returned to the step (e).

3. The method for industrially preparing chlorine according to Claim 1 wherein the product gas which has undergone the dehydration step (d) and desorbed and recovered chlorine gas obtained in the recovery step (f) are cooled and liquefied to separate a part of the chlorine contained therein as liquefied chlorine and the uncondensed remaining gas is then returned to the step (e).

4. The method for industrially preparing chlorine according to any one of Claims 1 to 3 wherein the adsorbent which is used in the adsorbent packing type pressure swing adsorption process is one selected from zeolites, non-zeolite type porous acidic oxides, active carbons and molecular sieve carbon.

5. An apparatus for industrially preparing chlorine which oxidizes hydrogen chloride in a starting material gas containing hydrogen chloride to obtain a product gas containing chlorine, and then concentrates/purifies chlorine in the product gas, the apparatus comprising the following means;

(a) means for carrying out an oxidation reaction of hydrogen chloride in the presence of a chromium oxide catalyst at a reaction temperature of from 300 to 500°C by the use of 0.25 mol or more of oxygen per mol of hydrogen chloride contained in the starting material gas,

(b) means for quenching the product gas mainly containing chlorine, water, unreacted hydrogen chloride, oxygen and volatilized/entrained chromium, and then washing it with water to recover chromium as an aqueous solution,

(c) means for further washing the product gas with water for unreacted hydrogen chloride to be absorbed by water, thereby recovering unreacted hydrogen chloride as an aqueous hydrogen chloride solution,

(d) means for further washing and dehydrating the product gas with sulfuric acid,

(e) means for recovering chlorine in the product gas and then returning a part or all of the unadsorbed remaining gas to the previous oxidizing means (a) as a circulating gas; characterised in that means(e) employs an adsorbent packaging type pressure swing adsorption device and:

(f) means for desorbing and recovering the chlorine gas adsorbed by the pressure swing adsorption device.

6. The apparatus for industrially preparing chlorine according to Claim 5 having means whereby the product gas which has undergone treatment by the dehydration means (d) is cooled and liquefied to separate a part of the chlorine contained therein as liquefied chlorine, and the uncondensed remaining gas is then returned to the means (e).

7. The apparatus for industrially preparing chlorine according to Claim 5 having means whereby the product gas which has undergone treatment by the dehydration means (d) and a desorbed and recovered chlorine gas obtained by the recovery means (f) are cooled and liquefied to separate a part of the chlorine contained therein as liquefied chlorine, and the uncondensed remaining gas is then returned to the means (e).

8. The apparatus for industrially preparing chlorine according to any one of Claims 5 to 7 wherein the adsorbent with which the adsorbent packing type pressure swing adsorption device is packed is one selected from zeolites, non-zeolite type porous acidic oxides, active carbons and molecular sieve carbon.

**Patentansprüche**

1. Verfahren zur industriellen Herstellung von Chlor, bei welchem Chlorwasserstoff in einem Ausgangsmaterialgas, welches Chlorwasserstoff enthält, oxidiert wird, um ein Produktgas zu erhalten, welches Chlor enthält, und bei dem dann das Chlorproduktgas konzentriert/gereinigt wird, wobei das Verfahren die folgenden Schritte aufweist:

(a) einen Schritt zur Ausführung einer Oxidationsreaktion von Chlorwasserstoff in Anwesenheit eines Chromoxidkatalysators bei einer Reaktionstemperatur von 300 bis 500°C unter Einsatz von 0,25 mol oder mehr an Sauerstoff pro mol Chlorwasserstoff, welches im Ausgangsmaterialgas enthalten ist,

(b) einen Schritt zum Abschrecken des Produktgases, welches hauptsächlich Chlor, Wasser, nichtreagierten Chlorwasserstoff, Sauerstoff und flüchtiges/mitgerissenes Chrom enthält, und anschließendes Reinigen mit Wasser, um Chrom als eine wäßrige Lösung zurückzugewinnen,

(c) einen Schritt zum weiteren Reinigen des Produktgases mit Wasser, um nichtreagierten Chlorwasserstoff durch Wasser zu absorbieren, wodurch nichtreagierter Chlor-wasserstoff als eine wäßrige Chlorwasserstofflösung zurückgewonnen wird,

(d) einen Schritt zum weiteren Reinigen bzw. Spülen und Dehydratisieren des Produktgases mittels Schwefelsäure,

(e) einen Schritt zum Separieren von Chlor aus dem Produktgas und zum anschließenden Rückführen eines Teils oder des gesamten nichtadsorbierten Restgases zu dem vorangehenden Oxidierungsschritt (a) als ein Zirkulationsgas;

**dadurch gekennzeichnet**, daß bei dem Schritt (e) ein Druckpendel-Adsorptionsverfahren mit einer Adsorptionsmittelpackung eingesetzt wird, an welches sich folgendes anschließt:

(f) ein Schritt zum Desorbieren und Rückgewinnen des Chlorgases, welches durch das Druckpendel-Adsorptionsverfahren adsorbiert worden ist.

2. Verfahren zur industriellen Herstellung von Chlor nach Anspruch 1, bei dem das Produktgas, welches einem Dehydratisierungsschritt (d) unterworfen worden ist, gekühlt und verflüssigt wird, um einen Teil des im Produktgas enthaltenen Chlors als verflüssigtes Chlor zu trennen und bei dem das unkondensierte Restgas dann zu dem Schritt (e) zurückgeleitet wird.

3. Verfahren zur industriellen Herstellung von Chlor nach Anspruch 1, bei dem das Produktgas, welches dem Hydratisierungsschritt (d) ausgesetzt worden ist, und das desorbierte und rückgewonnene Chlorgas erhalten im Rückgewinnungsschritt (f) gekühlt und verflüssigte werden, um einen Teil des darin enthaltenen Chlors als verflüssigtes Chlor zu trennen und bei dem das unkondensierte Restgas dann zu dem Schritt (e) zurückgeleitet wird.

4. Verfahren zur industriellen Herstellung von Chlor nach einem der Ansprüche 1 bis 3, bei dem das Adsorptionsmittel, welches bei dem Druckpendel-Adsorptionsverfahren mit Adsorptionsmittelpakkung eingesetzt wird, ein solches ist, welches aus der Gruppe gewählt ist, die Zeolite, poröse saure Oxide der Nicht-Zeolitart, Aktivkohle und Molekularsiebkohlenstoff (synthetisch hergestellter Kohlenstoff) umfaßt.

5. Vorrichtung zur industriellen Herstellung von Chlor, welche Chlorwasserstoff in einem Ausgangsmaterialgas, welches Chlorwasserstoffe enthält, oxidiert, um ein Produktgas zu erhalten, welches Chlor enthält, und welches dann das Chlorproduktgas konzentriert/reinigt, wobei die Vorrichtung die folgenden Einrichtungen aufweist:

(a) eine Einrichtung zur Durchführung einer Oxidationsreaktion von Chlorwasserstoff in Anwesenheit eines Chromoxidkatalysators bei einer Reaktionstemperatur von 300 bis 500°C unter Einsatz von 0,25 mol oder mehr an Sauerstoff pro mol Chlorwasserstoff, welches im Ausgangsmaterialgas enthalten ist,

(b) eine Einrichtung zum Abschrecken des Produktgases, welches hauptsächlich Chlor, Wasser, nichtreagierten Chlorwasserstoff, Sauerstoff und flüchtiges/mitgerissenes Chrom enthält, welche dann das Produktgas mit Wasser spült, um Chrom als eine wäßrige Lösung zurückzugewinnen,

(c) eine Einrichtung zum weiteren Spülen des Produktgases mit Wasser, um nichtreagierten Chlorwasserstoff durch das Wasser zu adsorbieren, wodurch nichtreagierter Chlorwasserstoff als eine wäßrige Chlorwasserstofflösung zurückgewonnen wird,

(d) eine Einrichtung zum weiteren Spülen und Dehydratisieren des Produktgases mit Schwefelsäure,

(e) eine Einrichtung zum Rückgewinnen von Chlor im Produktgas und zum anschließenden Rückführen eines Teils oder des gesamten nicht adsorbierten Restgases zu der vorangehenden Oxidationseinrichtung (a) als ein Zirkulationsgas;

**dadurch gekennzeichnet,** daß bei der Einrichtung (e) eine Druckpendel-Adsorptionseinrichtung mit einer Adsorptionsmittelpackung eingesetzt wird, und folgendes vorgesehen ist:

(f) eine Einrichtung zum Desorbieren und Rückgewinnen des Chlorgases, welches mittels der Druckpendel-Adsorptionseinrichtung adsorbiert worden ist.

**6.** Vorrichtung zur industriellen Herstellung von Chlor nach Anspruch 5, welche eine Einrichtung hat, durch die das Produktgas, welches einer Behandlung durch die Dehydratisierungseinrichtung (d) unterworfen worden ist, gekühlt und verflüssigt wird, um einen Teil des darin enthaltenen Chlors als verflüssigtes Chlor zu trennen, bei der das unkondensierte Restgas dann zu der Einrichtung (e) zurückgeführt wird.

**7.** Vorrichtung zur industriellen Herstellung von Chlor nach Anspruch 5, welche eine Einrichtung hat, durch die das Produktgas, welches einer Behandlung durch die Hydratisierungseinrichtung (d) unterworfen worden ist, und ein desorbiertes und rückgewonnenes Chlorwasserstoffgas, welches man durch die Rückgewinnungseinrichtung (f) erhalten hat, gekühlt und verflüssigt werden, um einen Teil des darin enthaltenen Chlors als verflüssigtes Chlor zu trennen und bei der das unkondensierte Restgas dann zu der Einrichtung (e) zurückgeführt wird.

**8.** Vorrichtung zur industriellen Herstellung von Chlor nach einem der Ansprüche 5 bis 7, bei der das Adsorptionsmittel, mit dem die Druckpendel-Adsorptionseinrichtung mit Adsorptionsmittelpakkung gefüllt ist, ein Adsorptionsmittel ist, welches aus der Gruppe gewählt ist, welche Zeolite, poröse saure Oxide der Nicht-Zeolitart, Aktivkohle und Molekularsiebkohlenstoff (synthetisch hergestellter Kohlenstoff) umfaßt.

**Revendications**

**1.** Procédé pour la préparation industrielle du chlore, qui comprend l'oxydation du chlorure d'hydrogène dans une matière de départ gazeuse contenant du chlorure d'hydrogène, pour obtenir un produit gazeux contenant du chlore, puis la concentration/purification du chlore dans le produit gazeux, le procédé comprenant les étapes suivantes :

(a) une étape de réalisation d'une réaction d'oxydation du chlorure d'hydrogène en présence d'un catalyseur à l'oxyde de chrome à une température de réaction de 300 à 500°C par utilisation de 0,25 mole ou plus d'oxygène par mole de chlorure d'hydrogène contenue dans la matière de départ gazeuse,
(b) une étape de refroidissement rapide du produit gazeux contenant principalement du chlore, de l'eau, du chlorure d'hydrogène n'ayant pas réagi, de l'oxygène et du chrome volatilisé/entraîné, puis son lavage avec de l'eau pour récupérer le chrome sous forme d'une solution aqueuse,
(c) une étape de lavage supplémentaire du produit gazeux avec de l'eau pour absorber par l'eau le chlorure d'hydrogène n'ayant pas réagi, afin de récupérer le chlorure d'hydrogène n'ayant pas réagi sous forme d'une solution aqueuse de chlorure d'hydrogène,
(d) une étape de lavage supplémentaire et de déshydratation du produit gazeux avec de l'acide sulfurique,
(e) une étape de séparation du chlore d'avec le produit gazeux, puis de retour d'une partie ou de la totalité du gaz résiduel non adsorbé a l'étape d'oxydation précédente (a) sous forme d'un gaz circulant ;

caractérisé en ce que l'étape (e) utilise un procédé d'adsorption à pression alternée du type à garnissage adsorbant, suivie de :

(f) une étape de désorption et de récupération du chlore gazeux adsorbé par le procédé d'adsorption à pression alternée.

**2.** Procédé pour la préparation industrielle du chlore selon la revendication 1, dans lequel le produit gazeux, qui a subi l'étape de déshydratation (d), est refroidi et liquéfié pour séparer une partie du chlore, contenu dans le produit gazeux, sous forme de chlore liquéfié, et le gaz non condensé résiduel est ensuite renvoyé à l'étape (e).

**3.** Procédé pour la préparation industrielle du chlore selon la revendication 1, dans lequel le produit gazeux, qui a subi l'étape de déshydratation (d), et le chlore gazeux désorbé et récupéré, obtenu dans l'étape de récupération (f), sont refroidis et liquéfiés pour séparer une partie du chlore qui y est contenu sous forme de chlore liquéfié, et le gaz non condensé résiduel est ensuite renvoyé à l'étape (e).

**4.** Procédé pour la préparation industrielle du chlore selon l'une quelconque des revendications 1 à 3, dans lequel l'adsorbant qui est utilisé dans le procédé d'adsorption à pression alternée du type à garnissage adsorbant, est choisi parmi les zéolites, les oxydes acides poreux de type non zéolitique, les charbons actifs et le charbon tamis moléculaire.

**5.** Appareil pour la préparation industrielle du chlore qui oxyde du chlorure d'hydrogène dans une matière de départ gazeuse contenant du chlorure d'hydrogène, pour obtenir un produit gazeux contenant du chlore, puis qui concentre/purifie le chlore dans le produit gazeux, l'appareil comprenant les éléments suivants :

(a) un élément pour effectuer une réaction d'oxydation de chlorure d'hydrogène en présence d'un catalyseur à l'oxyde de chrome à une température de réaction de 300 à 500°C par utilisation de 0,25 mole ou plus d'oxygène par mole de chlorure d'hydrogène contenue dans la matière de départ gazeuse,

(b) un élément pour refroidir rapidement le produit gazeux contenant principalement du chlore, de l'eau, du chlorure d'hydrogène n'ayant pas réagi, de l'oxygène et du chrome volatilisé/entraîné, puis le laver avec de l'eau pour récupérer le chrome sous forme d'une solution aqueuse,

(c) un élément pour laver encore le produit gazeux avec de l'eau pour absorber par l'eau le chlorure d'hydrogène n'ayant pas réagi, afin de récupérer le chlorure d'hydrogène n'ayant pas réagi sous forme d'une solution aqueuse de chlorure d'hydrogène,

(d) un élément pour laver encore et déshydrater le produit gazeux avec de l'acide sulfurique,

(e) un élément pour récupérer le chlore dans le produit gazeux, puis renvoyer une partie ou la totalité du gaz résiduel non adsorbé à l'élément d'oxydation précédent (a) sous forme d'un gaz circulant ;

caractérisé en ce que l'élément (e) utilise un dispositif d'adsorption à pression alternée du type à garnissage adsorbant et

(f) un élément pour désorber et récupérer le chlore gazeux adsorbé par le dispositif d'adsorption à pression alternée.

6. Appareil pour la préparation industrielle du chlore selon la revendication 5, comportant un élément grâce auquel le produit gazeux, qui a subi le traitement par l'élément déshydratant (d), est refroidi et liquéfié, pour séparer une partie du chlore, qui y est contenu, sous forme de chlore liquéfié, et le gaz non condensé résiduel est ensuite renvoyé à l'élément (e).

7. Appareil pour la préparation industrielle du chlore selon la revendication 5, comportant un élément grâce auquel le produit gazeux, qui a subi le traitement par l'élément déshydratant (d), et du chlore gazeux désorbé et récupéré, obtenu par l'élément de récupération (f), sont refroidis et liquéfiés, pour séparer une partie du chlore qui y est contenu sous forme de chlore liquéfié, et le gaz non condensé résiduel est ensuite renvoyé à l'élément (e).

8. Appareil pour la préparation industrielle du chlore selon l'une quelconque des revendications 5 à 7, dans lequel l'adsorbant dont le dispositif d'adsorption à pression alternée du type à garnissage adsorbant est garni, est choisi parmi les zéolites, les oxydes acides poreux de type non zéolitique, les charbons actifs et le charbon tamis moléculaire.

F I G. 1

FIG.2